# EUROPEAN PATENT APPLICATION

(11) **EP 3 974 381 A1**
(43) Date of publication of application: **30.03.2022**
(21) Application number: 20933812.8
(22) Date of filing: 16.07.2020
(51) Int. Cl.: C01B 32/192

(54) **MIXED INORGANIC ACID SOLVENT-BASED GRAPHENE PREPARATION METHOD**

(30) Priority: 30.04.2020 CN 202010365613
(71) Applicant: Beijing Choice Electronic Technology Co., Ltd., Beijing 100041 (CN)
(72) Inventor: QIAN, Xiaolun, Beijing 100041 (CN); MA, Chuanlong, Beijing 100041 (CN)
(74) Representative: Canzler & Bergmeier Patentanwälte Partnerschaft mbB
(86) International application number: PCT/CN2020/102326
(87) International publication number: WO 2021/217898

(57) **Abstract**

A mixed inorganic acid solvent-based graphene preparation method. An inorganic acid solvent having simple preparation and low costs is used to replace expensive organic solvents to prepare a graphene product by means of solvent stripping, so that problems of great toxicity and harsh preparation conditions brought about by using organic solvents are avoided, requirements for temperature during the preparation of graphene by means of solvent stripping is reduced, and the time required for the graphene stripping treatment is reduced, thereby simplifying the preparation process, and further facilitating the commercial and large-scale development of graphene prepared by means of solvent stripping.

## Description

### Technical Field

The present disclosure relates to the technical field of novel material manufacture, and particularly relates to a method for manufacturing graphene based on mixed inorganic acid solvent.

### Background Art

Graphene is a two-dimensional carbon nanomaterial consisting of carbon atoms in sp² hybridized orbitals in a form of hexagonal honeycomb lattices. This special structure endows graphene material with unique thermal, mechanical and electrical properties. The perfect graphene has an ideal two-dimensional crystal structure consisting of hexagonal lattices, and has a theoretical specific surface area up to 2.6×10² m²/g. Graphene has excellent thermal conductivity (3×10³ W/(m·K)) and mechanical properties (1.06×10³ GPa). In addition, the stable regular hexagonal lattice structure of graphene provides it excellent conductivity, with an electron mobility up to 1.5×10⁴ cm²/(V·s) at room temperature. The special structure, the outstanding heat and electric conductivity and the mechanical property of the graphene arouse great interests in the scientific community and become hotspots in material science research.

Currently, common methods for manufacturing graphene comprise mechanical stripping method, chemical oxidation method, crystal epitaxial growth method, chemical vapor deposition method, organic synthesis method, and carbon nanotube stripping method. Among which, although the mechanical stripping method and the chemical vapor deposition method can obtain high-quality graphene, they have a low yield and a high cost, thus having difficulties in applications of the graphene in the fields of composite materials and the like. Reduced graphene oxide method achieves a large-scale manufacture of graphene with low-cost, but the obtained graphene has a large number of defects. By using the solvent directly stripping method, it not only maintains structural integrity of graphene, but also achieves a large-scale manufacture of graphene, which has attracted wide attention from researchers.

In the prior art, the solvent stripping method mainly uses organic solvents having a Hansen solvent constant matched with that of graphite, such as N-methyl-pyrrolidone (NMP), N,N-dimethylformamide (DMF) and the like. These solvents generally have defects of high-cost, toxicity, high boiling point so that the method requires high preparation temperature, complicated preparation process and the like. Particularly, the solvent stripping method usually requires a long treatment time, leading to low preparation efficiency and a poor utilization rate of equipments. Therefore, the problem to be solved in the field currently is to find an alternative method that can overcome the above defects of the organic solvent and achieve effective stripping of graphene, and further reduce the cost, so as to adapt to the requirements of commercialization and large-scale production.

### Summary

In order to solve the defects of the prior art, the present disclosure provides a method for manufacturing graphene based on a mixed inorganic acid solvent. By using the inorganic acid solvent instead of the organic acid solvent in the prior art, it reduces the requirement on temperature and the time for the treatment process in manufacturing graphene by the solvent stripping method, thereby simplifying the manufacturing process, avoiding the use of toxic and expensive organic solvents, and being more beneficial to the commercialization and large-scale development of manufacturing graphene by the solvent stripping method.

In order to achieve the above purpose, the present disclosure provides the following technical solutions.

A method for manufacturing graphene based on a mixed inorganic acid solvent, characterized in comprising steps of:
S1, pretreating raw material graphite powder to obtain graphite powder to be stripped without impurities-;
S2, preparing a mixed inorganic acid solvent;
S3, adding the graphite powder to be stripped into the mixed inorganic acid solvent and uniformly stirring;
S4, performing a graphene stripping treatment to a mixed liquid of the graphite powder to be stripped and the mixed inorganic acid solvent after uniformly stirring to obtain a graphene mixed liquid; and
S5, extracting a graphene product from the graphene mixed liquid.

Further, the mixed inorganic acid solvent comprises at least one inorganic acid and at least one modifier; the modifier includes sodium bromate, potassium bromate or a mixture thereof.

Further, step S1 comprises sub-steps of:
S11, mixing raw material graphite powder with deionized water and pure alcohol in a ratio that 1 g of the raw material graphite powder is mixed with 130 mL to 150 mL of deionized water and 130 mL to 150 mL of pure alcohol, and continuously stirring by a magnetic stirrer for 24 hours or more at atmospheric temperature to obtain a mixed graphite dispersion liquid;
S12, performing a suction filtration operation on the mixed graphite dispersion liquid by using a filter membrane to obtain wet graphite; and
S13, drying the wet graphite to obtain graphite powder to be stripped.

Further, the filter membrane is an organic filter membrane having a pore diameter of no greater than 450 microns.

Further, the drying operation comprises placing the wet graphite contained in an evaporating dish on a constant-temperature drier at 75°C to 85°C and continuously drying for 8 hours or more.

Further, the mixed inorganic acid solvent comprises:
a mixed inorganic acid of nitric acid with a concentration of 60% to 65% and sulfuric acid with a concentration of 90% to 100% in any ratio between 1:2 and 1:4 by volume; and
sodium bromate or potassium bromate in a molar concentration range of 0.0001 mol/mL to 0.01 mol/mL.

Further, step S3 comprises mixing 0.5 g of the graphite powder to be stripped with 75 mL to 85 mL of the mixed inorganic acid solvent in a round-bottomed flask and continuously stirring for 2 hours or more.

Further, step S3 further comprises maintaining the temperature to be no greater than 50°C during the stirring.

Further, the graphene stripping treatment in step S4 comprises a temperature-controlled ultrasonic treatment, the temperature-controlled ultrasonic treatment comprises placing the mixed liquid of the graphite powder to be stripped and the mixed inorganic acid solvent contained in a round-bottomed flask in an ultrasonic cleaner equipped with a temperature control device to continuously perform an ultrasonic treatment for 6 hours or more, and simultaneously maintaining an operating temperature of the ultrasonic cleaner to be no greater than 50°C by the temperature control device during the ultrasonic treatment.

Further, the temperature control device comprises a cooling water circulation device.

Further, the operating temperature of the ultrasonic cleaner is no greater than 45°C.

Further, the ultrasonic cleaner is used for simultaneously performing the ultrasonic treatment on two groups of mixed liquid of the graphite powder to be stripped and the mixed inorganic acid solvent that contained in two round-bottom flasks respectively.

Further, step S5 comprises sub-steps of:
S51, mixing the graphene mixed liquid with excess deionized water to obtain a graphene diluent;
S52, uniformly stirring the graphene diluent in an airtight state, and standing for layering to obtain a supernatant and a lower-layer turbid liquid; and
S53, washing the supernatant with deionized water for a plurality of times, and drying residues after washing with deionized water to obtain the graphene product in a form of graphene sheet powder.

Further, the sub-step S52 comprises continuously stirring for 2 hours or more using a magnetic stirrer, standing for 8 hours or more for layering to obtain the supernatant and the lower-layer turbid liquid.

The beneficial effects of the disclosure are as follows:
According to the present method for manufacturing graphene based on the mixed inorganic acid solvent, by using the inorganic acid solvent with simple preparation and low-cost instead of expensive organic solvent to perform the solvent stripping method for manufacturing graphene products, it may avoid the problems of high toxicity and harsh preparation conditions caused by using organic solvents, meanwhile, it may effectively reduce the time required by graphene stripping treatment through adding the modifier, thereby greatly improving the graphene preparation efficiency and the utilization rate of the equipment; by using the temperature-controlled ultrasonic treatment to obtain the graphene, it may prevent graphene from being oxidized and converted into graphene oxide at high temperature; the graphene solution after ultrasonic treatment can be further prepared into graphene products in various forms, and the obtained graphene products is verified to have typical characteristics of graphene; and the present method is simple, convenient and feasible, and is more favorable for commercialization and large-scale development when compared with the prior art.

### Brief Description of the Drawings

Figure 1 is a flow chart of the method for manufacturing graphene based on the mixed inorganic acid solvent according to the present disclosure.
Figure 2 is an AFM scan image of the graphene product prepared by the method according to the present disclosure.
Figure 3 is an AFM profile height curve of the graphene product prepared by the method according to the present disclosure.
Figure 4 is a Raman spectrum of the graphene product prepared by the method according to the present disclosure.

### Detailed Descriptions

For a clearer understanding of the contents of the present disclosure, it will be described in detail with reference to the accompanying drawings and embodiments.

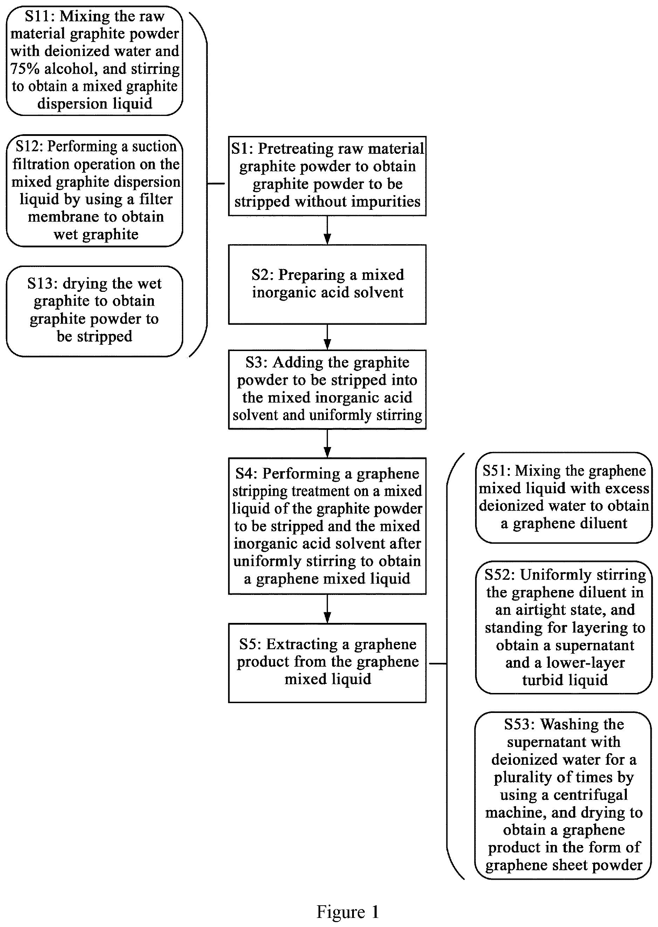

Figure 1 shows a flow chart of the present method for manufacturing graphene based on the mixed inorganic acid solvent, comprising steps of:
S 1, pretreating raw material graphite powder to obtain graphite powder to be stripped without impurities. Specifically, step S1 comprises sub-steps of: S11, mixing raw material graphite powder with deionized water and pure alcohol in a ratio that 1 g of the raw material graphite powder is mixed with 130 mL to 150 mL of deionized water and 130 mL to 150 mL of pure alcohol, and continuously stirring by a magnetic stirrer for 24 hours or more at atmospheric temperature to obtain a mixed graphite dispersion liquid, and particularly mixing in a ratio that 1 g of the raw material graphite powder is mixed with 140 mL of deionized water and 140 mL of pure alcohol; S12, performing a suction filtration operation on the mixed graphite dispersion liquid by using a filter membrane to obtain wet graphite, wherein the filter membrane is preferably an organic filter membrane having a pore diameter of no greater than 450 microns for better filtering effect; S13, placing the wet graphite contained in an evaporating dish on a constant-temperature drier at 75°C to 85°C and continuously drying for 8 hours or more to obtain graphite powder to be stripped, and particularly the constant-temperature for drying can be selected as 80°C. In order to prevent the graphite from being polluted during the drying process, a method of covering a perforated preservative film on the evaporating dish can be preferably used, so that the graphite may be prevented from being polluted while ensuring the evaporation of water.
S2, preparing a mixed inorganic acid solvent. Specifically, step S2 comprises: mixing nitric acid with a concentration of 60% to 65% and sulfuric acid with a concentration of 90% to 100% in any ratio between 1:2 and 1:4 by volume; and adding sodium bromate or potassium bromate as a modifier in a molar concentration range of 0.0001 mol/mL to 0.01 mol/mL to obtain the mixed inorganic acid solvent, and particularly, mixing nitric acid with a concentration of 65% and sulfuric acid with a concentration of 98% in a ratio of 1:3 by volume, and adding sodium bromate or potassium bromate as the modifier in a molar concentration of 0.001 mol/mL to obtain the mixed inorganic acid solvent.
S3, adding the graphite powder to be stripped into the mixed inorganic acid solvent, and uniformly stirring. Specifically, step S3 comprises: mixing 0.5 g of the graphite powder to be stripped with 75 mL to 85 mL of the mixed inorganic acid solvent in a round-bottomed flask, and continuously stirring for 2 hours or more by using a constant-temperature water bath magnetic stirrer, and particularly, mixing 0.5 g of the graphite powder to be stripped with 80 mL of the mixed inorganic acid solvent, and ensuring the operating temperature of the constant-temperature water bath magnetic stirrer to be no greater than 50°C by adding room-temperature water or low-temperature water into the constant-temperature water bath magnetic stirrer during the stirring for offsetting the heat generated by the oxidation of the inorganic acid.
S4, performing a graphene stripping treatment to a mixed liquid of the graphite powder to be stripped and the mixed inorganic acid solvent after uniformly stirring to obtain a graphene mixed liquid, and particularly using a temperature-controlled ultrasonic treatment. Specifically, the temperature-controlled ultrasonic treatment comprises: placing the mixed liquid of the graphite powder to be stripped and the mixed inorganic acid solvent contained in a round-bottom flask in an ultrasonic cleaner equipped with a temperature control device (such as a cooling water circulation device) to continuously perform an ultrasonic treatment for 6 hours or more, and simultaneously maintaining an operating temperature of the ultrasonic cleaner to be no greater than 50°C by the temperature control device during the ultrasonic treatment; in practice, an ultrasonic cleaner having an ultrasonic power of 120 W or more and an ultrasonic frequency of 40 kHz is preferably used. In order to obtain more ideal ultrasonic treatment results, the treatment process may further preferably use a 180 W ultrasonic cleaner for continuously performing ultrasonic treatment at a frequency of 40 kHz for 20 hours, meanwhile, the operating temperature of the ultrasonic cleaner is kept to be no greater than 45°C by the temperature control device during the ultrasonic treatment, and the operating temperature is ensured by periodically circulating the cooling water of the ultrasonic cleaner via the cooling water circulation device. In order to improve the operating efficiency of the ultrasonic treatment, the ultrasonic cleaner is preferably used for simultaneously performing the ultrasonic treatment on two groups of mixed liquid of the graphite powder to be stripped and the mixed inorganic acid solvent that contained in two round-bottom flasks respectively, according to the size of the ultrasonic cleaner and the temperature control ability of cooling water circulation. Meanwhile, the mixed inorganic acid solvent of the present disclosure can also be applied to other graphene stripping treatment methods such as standing treatment or mechanical oscillation treatment and other common methods, without being limited to ultrasonic treatment methods.
S5, extracting a graphene product from the graphene mixed liquid. Specifically, step S5 comprises sub-steps of: S51, mixing the graphene mixed liquid with excess deionized water (for example, in a ratio that 80 mL to 100 mL of graphene mixed liquid is mixed with 1.8 L of deionized water) to obtain a graphene diluent, and particularly, in order to prevent a sudden release of heat in large amount when the inorganic acid solution is mixed with deionized water, it may preferably use a mixing method of dropwise adding the graphene mixed liquid into excess deionized water in magnetic stirring; S52, uniformly stirring the graphene diluent, and standing for layering to obtain a supernatant and a lower-layer turbid liquid, preferably using a method of wrapping the graphene diluent container with a preservative film to form an airtight state, continuously stirring for 2 hours or more by using a magnetic stirrer, and standing for 8 hours or more for layering to obtain the supernatant and the lower-layer turbid liquid; S53, washing the supernatant with deionized water for a plurality of times by using a centrifugal machine, spreading residues after washing with deionized water on an evaporating dish, placing the evaporating dish on a constant-temperature drier at 55°C to 65°C (preferably 60°C) and continuously drying for 8 hours or more to obtain the graphene product in a form of graphene sheet powder, wherein the washing with deionized water preferably comprises steps of centrifuging the supernatant loaded in a centrifugal test tube by using the centrifugal machine, extracting the upper one third portion of the centrifuged supernatant and supplementing the same amount of deionized water, preferably washing with deionized water for 5 times or more in order to achieve the required dilution effect (the content of the acidic solution is reduced to 0.13% or less), and simultaneously performing ultrasonic oscillation to the mixed liquid after supplementing the same amount of deionized water to promote the mixing. For the lower-layer turbid liquid generated in the sub-step S52, the lower-layer turbid liquid may be subjected to suction filtration by using an aqueous filter membrane, and the graphene remaining on the aqueous filter membrane after suction filtration is placed on a constant-temperature drier at 55°C to 65°C (preferably dried by using a constant-temperature drier at 60°C) and continuously dried for 1 hour or more to obtain the graphene product in the form of a graphene nanosheet. However, the quality of the graphene product obtained by using the lower-layer turbid liquid is inferior to that of the supernatant, which is mainly manifested by more layers and lower performance of the obtained graphene. Meanwhile, the utilization of the graphene diluent is not limited to extracting graphene products by the above method. The graphene diluent may be directly used for manufacturing graphene thin films by using a spin coating method or a self-assembly method. The produced graphene thin films may be carved and molded by a carving machine and further processed into a graphene tattoo type electrode plate, a graphene tattoo type pressure sensor or pulse sensor, and the like.

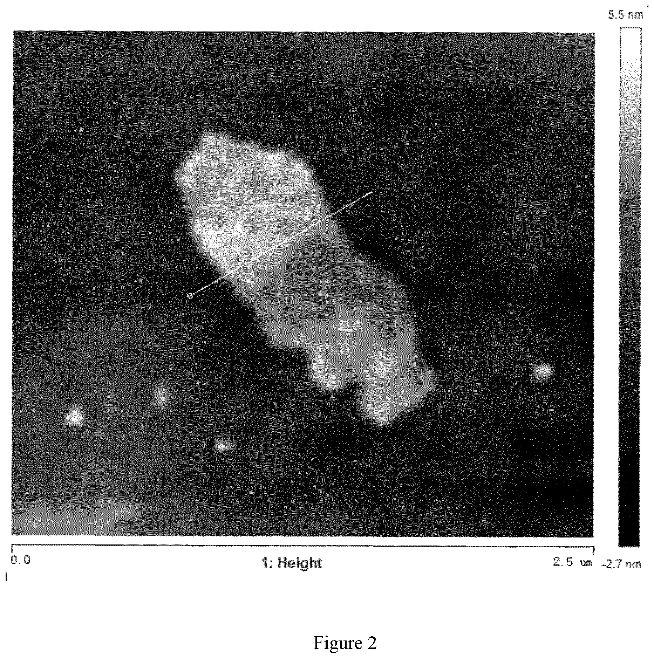

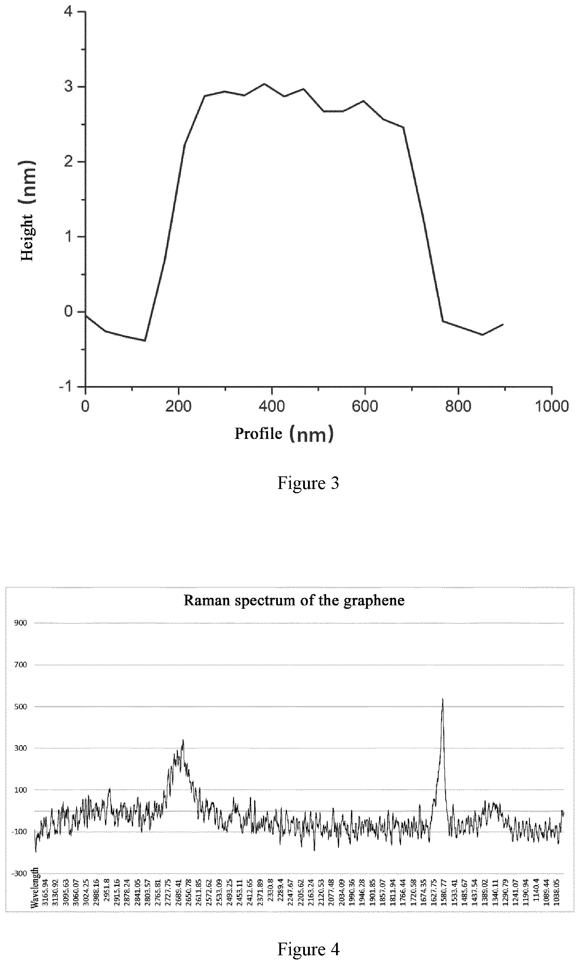

Figure 2 shows an AFM scan image of the graphene product prepared by the above method, and Figure 3 shows a profile height curve corresponding to the position of the AFM scan image of the graphene product in Figure 2. The prepared graphene products mostly have a thickness of 10 layers or less by AFM characterization, which proves that the product obtained according to the above method is graphene.

Figure 4 shows a Raman spectrum of the graphene product prepared by the above method. It can be clearly observed from Figure 3 that the graphene product shows three typical characteristic peaks of graphene around 1350 cm⁻¹, 1582 cm⁻¹ and 2700 cm⁻¹, respectively. In addition, the peak at 1350 cm⁻¹ is much lower than the peak at 1582 cm⁻¹, indicating that the graphene product has a low density of defects.

The graphene product prepared by the above method is subjected to a four-probe conductivity test. The thin film with a thickness of 0.3 mm obtained by suction filtration has a sheet resistance between 380 mΩ/sq and 440 mΩ/sq and a resistivity between 1.14 mΩ·cm and 1.32 mΩ·cm, indicating a better conductivity.

The time for the graphene stripping treatment can be effectively reduced by using the mixed inorganic acid solvent with the modifier, which is illustrated with a comparative example as below.

The graphite powder to be stripped obtained through the same pretreatment process is divided into two equal parts, wherein one part is mixed with a mixed inorganic acid solvent A with a modifier, and the other part is mixed with a mixed inorganic acid solvent B without the modifier. These two mixed inorganic acid solvents A and B are of the same volume and obtained by mixing nitric acid with a concentration of 65% and sulfuric acid with a concentration of 98% according to a ratio of 1:3 by volume, and sodium bromate with a molar concentration of 0.001 mol/mL is added into the mixed inorganic acid solvent A as the modifier. The two mixtures are uniformly stirred respectively, placed in the same ultrasonic cleaner and continuously subjected to ultrasonic treatment with a frequency of 40 kHz and an ultrasonic power of 180 W, and regularly sampled the mixtures A and B to detect the thickness of the obtained graphene product. When the ultrasonic treatment is continued for 6 hours, it can be observed that 80% or more of the sampled graphene from the mixture A are qualified with the thickness of 10 layers or less, while only about 12% of the sampled graphene from mixture B have the thickness of 10 layers or less, and the rest are not effectively separated; when the ultrasonic treatment is continued for 20 hours, it can be observed that 99% or more of the sampled graphene from mixture A are qualified with the thickness of 10 layers or less, while it cannot be observed that 99% or more of the sampled graphene from mixture B are qualified with the thickness of 10 layers or less until the ultrasonic treatment is continued for 48 hours. Under the same preparation conditions, using the mixed inorganic acid solvent with the modifier can reduce the time for the graphene stripping treatment method by at least 10 hours or more when compared to using the mixed inorganic acid solvent without the modifier, and particularly can reduce the time for the graphene stripping treatment method by 20 hours or more when the ultrasonic treatment is performed under a sufficient power (120 W or more).

The above description is only for the preferred embodiment of the present disclosure, and the scope of the present disclosure is not limited thereto. Any changes or alternatives within the technical scope of the present disclosure that can be easily conceived by a skilled person in the art are also within the protection scope of the present disclosure. Therefore, the protection scope of the present disclosure should be subjected to the protection scope of the claims.

## Claims

1. A method for manufacturing graphene based on a mixed inorganic acid solvent, **characterized by** comprising steps of:
S1, pretreating raw material graphite powder to obtain graphite powder to be stripped without impurities;
S2, preparing a mixed inorganic acid solvent;
S3, adding the graphite powder to be stripped into the mixed inorganic acid solvent and uniformly stirring;
S4, performing a graphene stripping treatment to a mixed liquid of the graphite powder to be stripped and the mixed inorganic acid solvent after uniformly stirring to obtain a graphene mixed liquid; and
S5, extracting a graphene product from the graphene mixed liquid.

2. The method according to claim 1, wherein the mixed inorganic acid solvent comprises at least one inorganic acid and at least one modifier; and the modifier includes sodium bromate, potassium bromate or a mixture thereof.

3. The method according to claim 1 or 2, wherein step S1 comprises sub-steps of:
S11, mixing raw material graphite powder with deionized water and pure alcohol in a ratio that 1 g of the raw material graphite powder is mixed with 130 mL to 150 mL of deionized water and 130 mL to 150 mL of pure alcohol, and continuously stirring by a magnetic stirrer for 24 hours or more at atmospheric temperature to obtain a mixed graphite dispersion liquid;
S12, performing a suction filtration operation on the mixed graphite dispersion liquid by using a filter membrane to obtain wet graphite; and
S13, drying the wet graphite to obtain graphite powder to be stripped.

4. The method according to claim 3, wherein the filter membrane is an organic filter membrane having a pore diameter of no greater than 450 microns.

5. The method according to claim 3, wherein the drying operation comprises placing the wet graphite contained in an evaporating dish on a constant-temperature drier at 75°C to 85°C and continuously drying for 8 hours or more.

6. The method according to claim 2, wherein the mixed inorganic acid solvent comprises:
a mixed inorganic acid of nitric acid with a concentration of 60% to 65% and sulfuric acid with a concentration of 90% to 100% in any ratio between 1:2 and 1:4 by volume; and
sodium bromate or potassium bromate in a molar concentration range of 0.0001 mol/mL to 0.01 mol/mL.

7. The method according to claim 1 or 2, wherein step S3 comprises mixing 0.5 g of the graphite powder to be stripped with 75 mL to 85 mL of the mixed inorganic acid solvent in a round-bottomed flask and continuously stirring for 2 hours or more.

8. The method according to claim 8, wherein step S3 further comprises maintaining the temperature to be no greater than 50°C during the stirring.

9. The method according to claim 1 or 2, wherein the graphene stripping treatment in step S4 comprises a temperature-controlled ultrasonic treatment, and the temperature-controlled ultrasonic treatment comprises placing the mixed liquid of the graphite powder to be stripped and the mixed inorganic acid solvent contained in a round-bottomed flask in an ultrasonic cleaner equipped with a temperature control device to continuously perform an ultrasonic treatment for 6 hours or more, and simultaneously maintaining an operating temperature of the ultrasonic cleaner to be no greater than 50°C by the temperature control device during the ultrasonic treatment.

10. The method according to claim 9, wherein the temperature control device comprises a cooling water circulation device.

11. The method according to claim 9, wherein the ultrasonic cleaner is operated at a temperature of no greater than 45°C.

12. The method according to claim 9, wherein the ultrasonic cleaner is used for simultaneously performing the ultrasonic treatment on two groups of the mixed liquid of the graphite powder to be stripped and the mixed inorganic acid solvent that contained in two round-bottom flasks respectively.

13. The method according to claim 1 or 2, wherein step S5 comprises sub-steps of:
S51, mixing the graphene mixed liquid with excess deionized water to obtain a graphene diluent;
S52, uniformly stirring the graphene diluent in an airtight state, and standing for layering to obtain a supernatant and a lower-layer turbid liquid; and
S53, washing the supernatant with deionized water for a plurality of times, and drying residues after washing with deionized water to obtain a graphene product in a form of graphene sheet powder.

14. The method according to claim 13, wherein the sub-step S52 comprises continuously stirring for 2 hours or more using a magnetic stirrer, standing for 8 hours or more for layering to obtain the supernatant and the lower-layer turbid liquid.
